# EUROPEAN PATENT SPECIFICATION

(11) **EP 2 735 454 B1**
(45) Date of publication and mention of the grant of the patent: **07.09.2016**
(21) Application number: 12817248.3
(22) Date of filing: 20.07.2012
(51) Int. Cl.: B60C 11/16

(54) **STUD FOR TIRE, AND STUDDED TIRE**
SPIKE FÜR REIFEN UND REIFEN MIT SPIKES
CRAMPON POUR PNEUMATIQUE ET PNEUMATIQUE À CRAMPONS

(30) Priority: 22.07.2011 JP 2011161203
(43) Date of publication of application: 28.05.2014
(73) Proprietor: Bridgestone Corporation, Tokyo 104-8340 (JP)
(72) Inventor: SAWADA, Hiroki, Kodaira-shi Tokyo 187-8531 (JP); KAWAMATA, Satoru, Kodaira-shi Tokyo 187-8531 (JP); SATO, Hiroshi, Kodaira-shi Tokyo 187-8531 (JP)
(74) Representative: Oxley, Robin John George
(86) International application number: PCT/JP2012/004640
(87) International publication number: WO 2013/014900

(56) References cited:
- EP-A2- 1 798 069
- WO-A1-2010/128862
- JP-A- 8 118 920
- JP-A- 10 193 921
- JP-A- 10 264 618
- JP-A- S61 232 904
- JP-A- 2008 284 922
- JP-A- 2010 070 052
- JP-A- 2010 095 212
- JP-B- S4 818 761
- JP-U- 3 042 577
- JP-U- S4 984 801
- JP-U- S5 031 607

## Description

### TECHNICAL FIELD

The present invention relates to tire studs for use in a studded tire and also relates to a studded tire having the tire studs fitted in pit holes for accommodating studs formed in a ground-contact surface of a tread thereof.

### BACKGROUND ART

A studded tire, having metal studs fitted in plural pit holes formed in a ground-contact surface of a tread thereof, has been conventionally known as a winter tire capable of exhibiting improved running performances on a frozen road (an ice road) or a snow-covered road.

A stud possessing: a cylindrical body having a small hole formed in one end face thereof; a hard pin, press-inserted into the hole of the cylindrical body; and a flange provided integral with the cylindrical body on the other end face side thereof for preventing the stud from coming off is generally used as a stud for use in a studded tire (refer to PTL 1, for example).

Such a stud as described above is fitted in a pit hole formed in a ground-contact surface of a tread of a tire such that only the pin protrudes from the tire surface and the remaining portion of the stud, i.e. the portion from the flange to the one end face of the body, is embedded in the tread portion.
In general, the pin is formed by using super hard metal such as tungsten steel and the body and the flange are formed by using metal such as aluminum alloy, steel and the like, respectively.

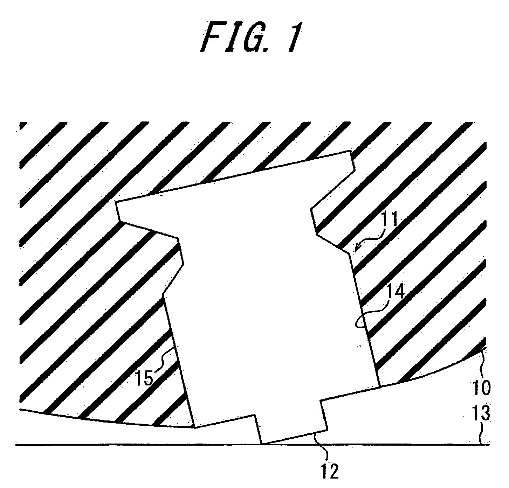

In a studded tire having studs as described above fitted in plural pit holes formed in a ground-contact surface of a tread thereof, the studs thus fitted in the tire scratch ice/snow to increase friction resistance of the tire.
Specifically, in a conventional studded tire, a pin 12 of a stud 11 embedded in a tread portion 10 is first brought into contact with a road surface 13 (an ice road or a snow-covered road) as shown in FIG. 1 and a body 15, a portion of which has projected out of a pit hole 14 due to the contact of the pin 12 with the road surface 13, is then brought into contact with the road surface 13, so that the stud 11 scratches ice/snow to improve running performance of the tire.
Attention is drawn to the disclosure of JP 3 042 577U.

### CITATION LIST

### Patent Literature

PTL 1: EP 1798069 B1

### SUMMARY OF THE INVENTION

### Technical Problems

There has been an increasing demand for well ensured safety during driving a vehicle in recent years. In this connection, it is necessary to increase ice-scratching force caused by studs to increase friction resistance of such a studded tire as described above in order to improve on-ice performance thereof.
There is a strong demand, in particular when pins of tire studs are worn, for a technique of increasing ice-scratching force caused by the studs.

An object of the present invention is to provide tire studs capable of improving braking performance of a tire on an ice road, as well as a studded tire having the tire studs thereon.

### Solution to the Problems

Primary structures of the present invention are as follows.
(1) A tire stud, comprising: a column-like body having a recessed portion formed at one end face in the axial direction thereof; and a pin provided in the recessed portion such that a portion of the pin protrudes from the one end face of the body, wherein: at least one hole extending in the axial direction of the pin is formed in an upper surface of the pin; and provided that the maximum height measured from the one end face of the body to the upper surface of the pin is h (mm) and the maximum depth of the hole formed in the upper surface of the pin is d (mm), 0.1 ≤ d/h ≤ 0.5, characterized in that provided that the maximum diameter of the upper surface of the pin is OD (mm) and the total edge length at the upper surface of the pin is L (mm), 2.0 ≤ OD ≤ 4.0 and 3.0 ≤ L/OD ≤ 9.0.
   In the present invention, "the maximum diameter" of an upper surface of a pin represents the largest interval between two parallel lines when the two parallel lines each tangent to one end face of the pin interpose the one end face therebetween. Further, "the total edge length" (L) at an upper surface of a pin represents the sum of the total length of edge(s) demarcated by the hole(s) and the total length of outer peripheral edge(s) of the upper surface of the pin.
(2) The tire stud of (1) above, wherein provided that the maximum diameter of the upper surface of the pin is OD (mm) and the maximum diameter of the hole formed in the upper surface of the pin is ID (mm), 0.15 ≤ ID/OD ≤ 0.8.
   In the present invention, "the maximum diameter" of a hole formed in an upper surface of a pin represents the maximum width of the hole when viewed from the same position at which the maximum diameter OD of the upper surface of the pin is measured between the two parallel lines described above.
(3) The tire stud of (1) or (2) above, wherein the one end face of the body has a circular shape.
(4) The tire stud of any of (1) to (3) above, wherein the body has a flange and provided that: radius measured from the central axis of the body to an outer peripheral edge of the flange is R (mm); the maximum value of radius R on one side in the tire circumferential direction is Rf (mm); and the maximum value of radius R on the other side in the tire circumferential direction is Rk (mm), Rf ≤ Rk.
(5) The tire stud of any of (1) to (4) above, wherein the body has a flange and provided that: radius measured from the central axis of the body to an outer peripheral edge of the flange is R (mm); the maximum value of radius R on one side in the tire circumferential direction is Rf (mm); the maximum value of radius R on the other side in the tire circumferential direction is Rk (mm); the maximum value of radius R on the inner side in the tire widthwise direction is Ri (mm); and the maximum value of radius R on the outer side in the tire widthwise direction is Ro (mm), Rf, Rk, Ri and Ro are each in the range of 3.0 mm to 5.0 mm (inclusive of 3.0 mm and 5.0 mm).
(6) A studded tire, comprising the tire studs of any of (1) to (5) fitted in pit holes formed in a ground-contact surface of a tread thereof.

### Advantageous Effect of the Invention

According to the present invention, it is possible to provide tire studs capable of improving braking performance of a tire on an ice road, as well as a studded tire having the tire studs thereon.

### BRIEF DESCRIPTION OF THE DRAWINGS

FIG. 1 is a view for explaining how a conventional studded tire scratches a road surface.
FIG. 2 is a front view showing a tire stud according to one embodiment of the present invention.
FIG. 3 is a schematic perspective view showing an example of pin configuration of the tire stud.
FIG. 4 is a developed view showing a ground-contact surface of a tread of a studded tire according to the one embodiment of the present invention.
FIG. 5 is a schematic perspective view showing another example of pin configuration of the tire stud.
FIG. 6 is a schematic perspective view showing yet another example of pin configuration of the tire stud.
FIG. 7A and FIG. 7B are views each explaining radii of a flange.
FIG. 8 is a diagram showing a pin configuration of the tire stud of the present invention by a top view and a cross sectional view thereof.
FIG. 9 is a diagram showing another pin configuration of the tire stud of the present invention by a top view and a cross sectional view thereof.
FIG. 10 is atop view showing yet another pin configuration of the tire stud of the present invention.
FIG. 11 is a top view showing yet another pin configuration of the tire stud of the present invention.
FIG. 12 is a top view showing yet another pin configuration of the tire stud of the present invention.
FIG. 13 is a top view showing yet another pin configuration of the tire stud of the present invention.
FIG. 14 is a top view showing yet another pin configuration of the tire stud of the present invention.
FIG. 15 is a top view showing yet another pin configuration of the tire stud of the present invention.
FIG. 16 is a top view showing yet another pin configuration of the tire stud of the present invention.
FIG. 17 is a top view showing yet another pin configuration of the tire stud of the present invention.
FIG. 18 is a top view showing yet another pin configuration of the tire stud of the present invention.
FIG. 19 is a top view showing yet another pin configuration of the tire stud of the present invention.
FIG. 20 is a top view showing yet another pin configuration of the tire stud of the present invention.
FIG. 21 is a top view showing yet another pin configuration of the tire stud of the present invention.
FIG. 22 is a top view showing yet another pin configuration of the tire stud of the present invention.
FIG. 23 is a top view showing yet another pin configuration of the tire stud of the present invention.
FIG. 24 is a top view showing a conventional pin configuration of a tire stud.
FIG. 25 is a top view showing another conventional pin configuration of a tire stud.
FIG. 26 is a top view showing yet another pin configuration of the tire stud of the present invention.

### DESCRIPTION OF THE EMBODIMENTS

The present invention will be described in detail with reference to the drawings hereinafter.

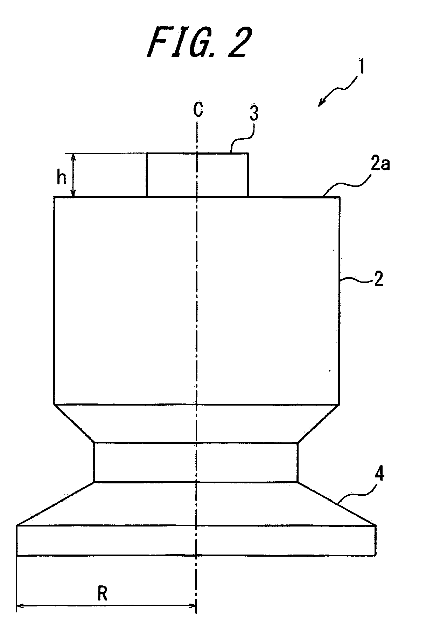

FIG. 2 is a front view showing a tire stud (which will be referred to simply as a "stud" hereinafter) according to one embodiment of the present invention.
As shown in FIG. 2, the stud 1 of the one embodiment of the present invention has: a substantially cylindrical body 2; a column-like pin 3 provided in a recessed portion formed in one end face 2a in the axial direction of the body 2 (in the direction of the central axis C extending in the longitudinal direction of the body 2); and a flange 4 provided integral with the cylindrical body 2 on the other end face side in the axis C direction of the body 2 for preventing the stud from coming off.

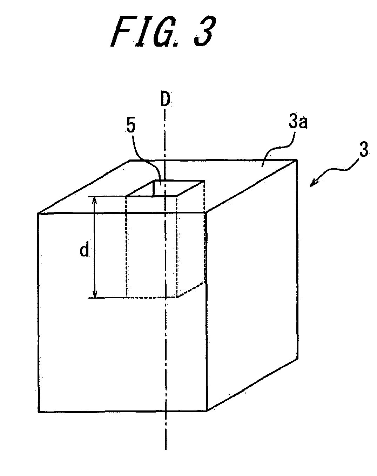

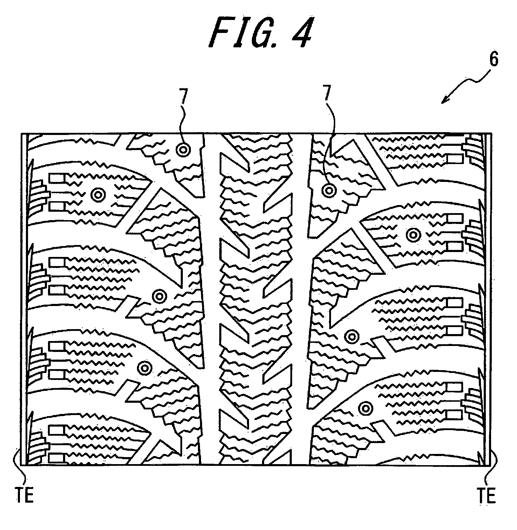

FIG. 3 is a schematic perspective view showing a pin configuration of the stud according to the one embodiment of the present invention.
As shown in FIG. 3, the pin 3 has at least one hole 5 (a single hole in an example shown in FIG. 3) formed in an upper surface 3a of the pin 3 (the upper surface 3a is an end face to be brought into contact with a road surface) so as to extend in the axial direction of the pin 3, i.e. the direction of the central axis D extending in the longitudinal direction of the pin).
The hole 5 is rectangular in a cross section cut in the radial direction of the pin 3 (the cross section orthogonal to the central axis D) and terminates within the pin 3 without penetrating through the pin 3 in the axial direction thereof in the example shown in FIG. 3.
Further, the stud 1 of the present embodiment satisfies, provided that the maximum height measured from the one end face 2a of the body 2 to the upper surface 3a of the pin 3 is h (mm) and the maximum depth of the hole 5 formed in the upper surface 3a of the pin 3 is d (mm) as shown in FIG. 2 and FIG. 3,0.1 ≤ d/h ≤ 0.5.
An effect obtained in a case where the studs 1, each having the pin 3 of the aforementioned configuration provided in the recessed portion thereof, are fitted in pit holes 7 formed in a ground-contact surface 6 of a tread of a studded tire as shown in FIG. 4 will be described hereinafter.

According to the present invention, the hole(s) 5 is formed in the upper surface 3a of the pin 3, so that edge(s) demarcated by the hole(s) 5 in the upper surface 3a of the pin 3 constitute additional edge components to be brought into contact with an ice road when a vehicle runs on the ice road. These edge components thus increased on an ice road significantly improve braking performance of the tire on the ice road. More specifically, when the ratio d/h is less than 0.1, the hole 5 is too shallow to cause a satisfactory edge effect when the pin 3 is dragged on ice. The ratio d/h exceeding 0.5 results in too deep a hole with insufficient strength, whereby the pin (the upper surface thereof in particular) is likely to be chipped not only when the pin is dragged on ice but also even during normal running on a dry road. An advantageous effect of improving braking performance on ice can no longer be pursued when the total edge length of the pin has decreased due to such chipping of the pin in the present invention.
Further, according to the present invention, the hole 5 extends in the axial direction of the pin 3, so that additional edge components as the edges demarcated by the hole constantly appear and thus successfully improve braking performance of the tire on an ice road even when the pin 3 is worn.
Yet further, according to the present invention, the hole 5 terminates within the pin 3 without penetrating through the pin in the axial direction thereof, whereby it is possible to ensure sufficient strength of the pin 3 to suppress breakage such as cracking of the pin. Yet further, according to the present invention, weight of the pin 3 is reduced due to formation of the hole 5 therein.

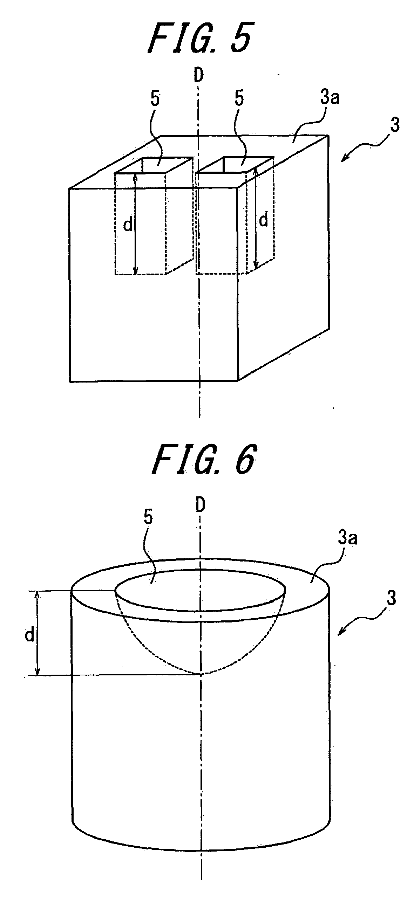

As shown in FIG. 5, plural holes (two holes in an example shown in FIG. 5) may be formed in the upper surface of the pin 3 in the present embodiment.
Braking performance of the tire on an ice road can be further improved in this case due to further increase in the edge components to be brought into contact with a road surface.

In the present embodiment, provided that hypothetical cross sectional area with no holes formed therein of the pin 3 is S1 and the total cross sectional area of the hole 5 (the sum of cross sectional areas of the holes 5 when plural holes 5 are formed) is S2 in a cross section orthogonal to the axial direction of the pin 3, the ratio S2/S1 preferably satisfies 0.1 ≤ S2/S1 ≤ 0.5.
Sufficient lengths of edges demarcated by the hole(s) can be ensured and thus the edge components are sufficiently increased at the upper surface of the pin, so that a satisfactorily high edge effect can be obtained, by setting the ratio S2/S1 to be at least 0.1.
The area of the upper surface 3 a of the pin 3 is prevented from being too small to ensure satisfactory strength of the pin 3, that is, breakage of the pin such as cracking at edge portions thereof can be well suppressed, by setting the ratio S2/S1 to be 0.5 or less.

The hole 5 preferably terminates within the pin 3 without penetrating through the pin in the axial direction thereof because then rigidity of the pin is ensured and breakage of the pin such as cracking can be suppressed.

Further, the hole 5 preferably has a rectangular configuration in a cross section in the radial direction of the pin 3 (a cross section orthogonal to the axial direction of the pin), as shown in FIG. 3 and FIG. 5. However, the cross sectional configuration of the hole 5 is not limited to a rectangular shape but may be any of other various shapes including circular, oval, and polygonal shapes.
In this connection, the hole 5 may have a configuration of which cross sectional area changes in the axial direction of the pin 3, as shown in FIG. 6.

Yet further, in the present invention, provided that the maximum diameter of the upper surface of the pin is OD (mm) and the total edge length at the upper surface of the pin is L (mm), OD and L/OD satisfy 2.0 ≤ OD ≤ 4.0 and 3.0 ≤ L/OD ≤ 9.0, respectively.
OD ≤ 2.0 mm ensures the minimally required size of the pin itself, thereby ensuring the minimally required lengths of outer peripheral edges at the upper surface of the pin and thus the minimally requited braking performance of the tire on ice. OD ≤ 4.0 mm avoids too large a size of the pin itself, thereby decreasing counterforce from a road surface during running on a dry road surface to ensure that the tire exhibits generally required resistance to stud-coming off
A sufficiently large non-hole area of the upper surface of the pin and thus satisfactorily high strength of the pin are ensured, in other words, breakage such as cracking of the edge portions of the pin due to insufficient strength of the pin is well suppressed, by setting the ratio L/OD to be in the aforementioned range. That is, deterioration of braking performance of the tire on ice due to breakage of the pin can be well suppressed by setting the ratio L/OD to be in the aforementioned range.

Further, in the present invention, provided that the maximum diameter of the hole 5 is ID (mm), the ratio ID/OD preferably satisfies 0.15 ≤ ID/OD ≤ 0.8.
The ratio ID/OD ≥ 0.15 ensures ample edge components working when the pin is dragged on ice, thereby further improving braking performance of the tire on ice.
The ratio ID/OD ≤ 0.8 ensures sufficiently high strength of the upper surface of the pin, thereby well suppressing breakage such as cracking of edge portions of the pin. In short, deterioration of braking performance of the tire on ice due to breakage of the pin can be well suppressed by setting the ratio ID/OD to be 0.8 or less.

Yet further, the one end face of the body preferably has a circular shape in the present invention.
As soon as pin edges of studs have been hooked by an ice road surface in a brake operation, the studs are dragged and sequentially fall forward relative to a direction normal to a tire tread in which each of the studs was originally fitted in the tread. An Edge portion of the one end face of the body is then brought into contact with the ice road surface when each stud falls forward to a certain degree, thereby inhibiting the originally intended ice-scratching effect caused by the pin edges.
In the present invention, however, angles at which the studs topple to bring the edges of the bodies thereof into contact with an ice road surface are made even regardless of the locations of the studs because each one end face of the body of each stud is circular. Accordingly, it is possible in the present invention to suppress variation in pin edge performances of the studs and thus comprehensively ensure good tire performances not only in braking performance in straight running but also in braking and gripping performance in various situations including a cornering situation.

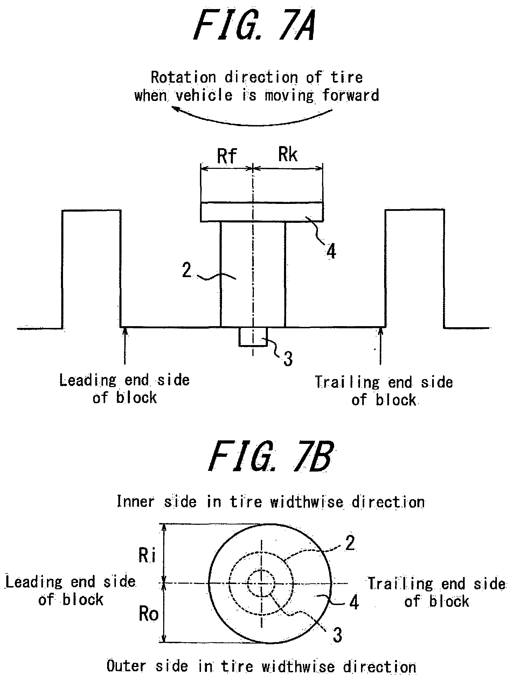

Yet further, in the present invention, provided that: radius measured from the central axis C of the body to an outer peripheral edge of the flange 4 is R (mm); the maximum value of radius R on one side in the tire circumferential direction is Rf (mm); and the maximum value of radius R on the other side in the tire circumferential direction is Rk (mm) as shown in FIG. 2 and FIG. 7A, it is preferable that Rf ≤ Rk.
In this connection, an effect caused when the tire of the present invention is mounted on a vehicle such that the aforementioned "one side in the tire circumferential direction" corresponds to the leading end side and the aforementioned "the other side in the tire circumferential direction" corresponds to the trailing end side will be described hereinafter.
During a brake operation, the body of each stud in contact with an ice surface falls forward, i.e. in the direction of movement of the vehicle, in a state where the pin edges are hooked by the ice surface. In this regard, a degree of the body falling forward or in the direction of movement of the vehicle can be made relatively small when the aforementioned relationship formula Rf ≤ Rk is satisfied, which makes it possible to effectively maintain the ice-scratching effect by the pin edges to improved on-ice braking performance of the tire.

Further, in addition to the definitions of R, Rf and Rk, provided that: the maximum value of radius R on the inner side in the tire widthwise direction is Ri (mm); and the maximum value of radius R on the outer side in the tire widthwise direction is Ro (mm), Rf, Rk, Ri and Ro are each preferably in the range of 3.0 mm to 5.0 mm (inclusive of 3.0 mm and 5.0 mm).
It is possible to suppress aforementioned toppling of the studs in starting, braking and cornering situations and the like to ensure good resistance to stud-coming off of the tire by setting radius of the flange to be at least 3.0 mm. It is possible to facilitate and ensure firm embedment of the studs when the studs are fitted in the pit holes formed in a tire tread, thereby ensuring good resistance to stud-coming off of the tire, by setting radius of the flange to be 5.0 mm or less.

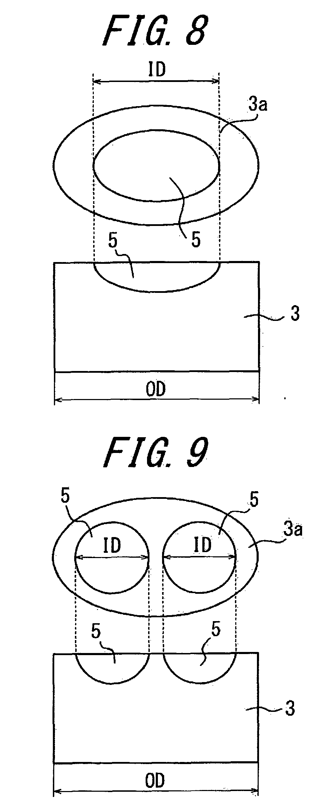

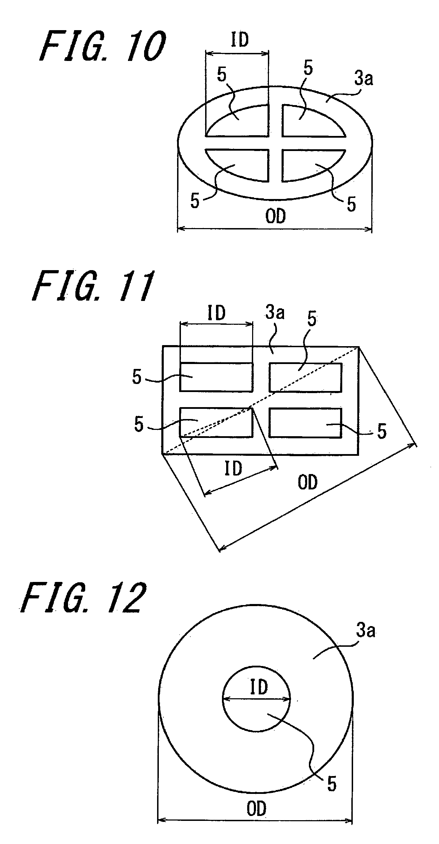

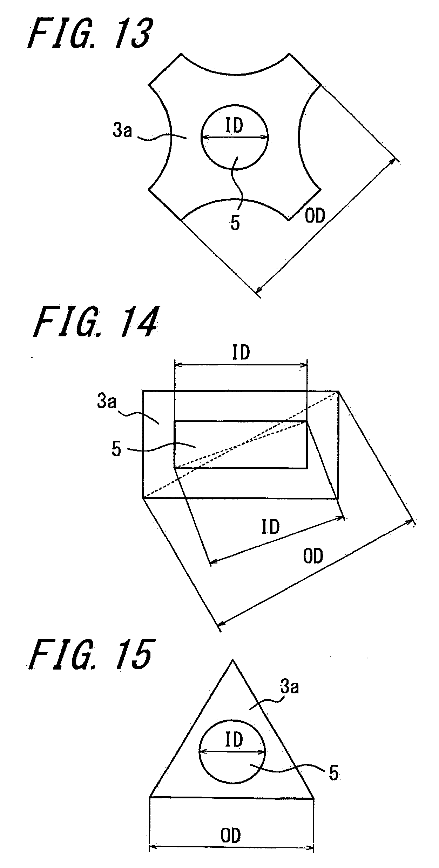

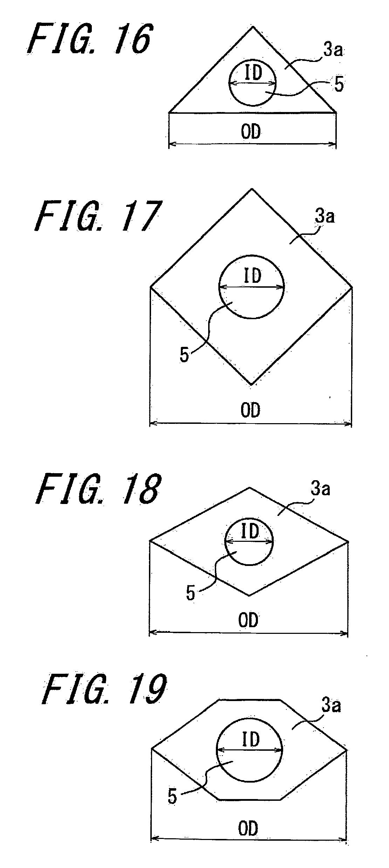

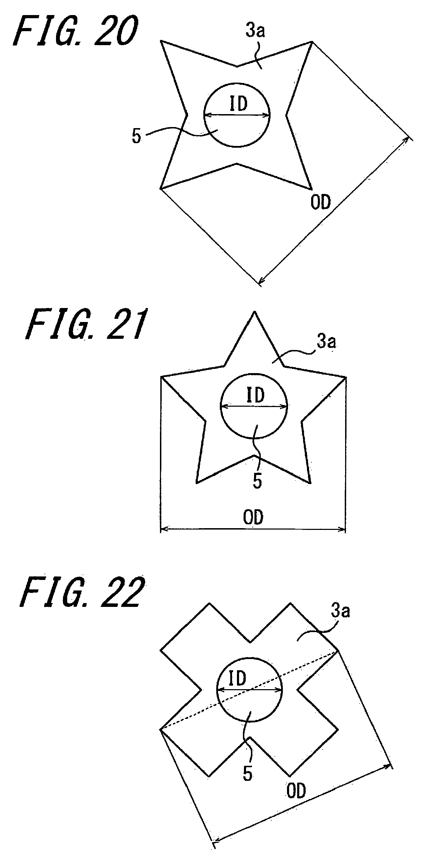

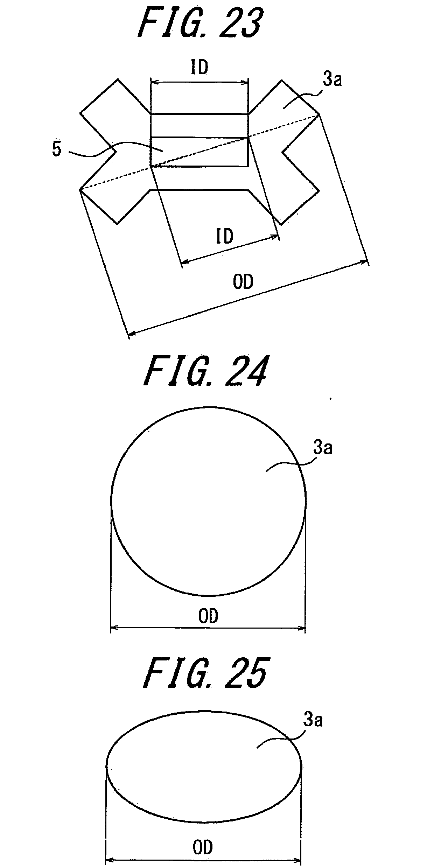

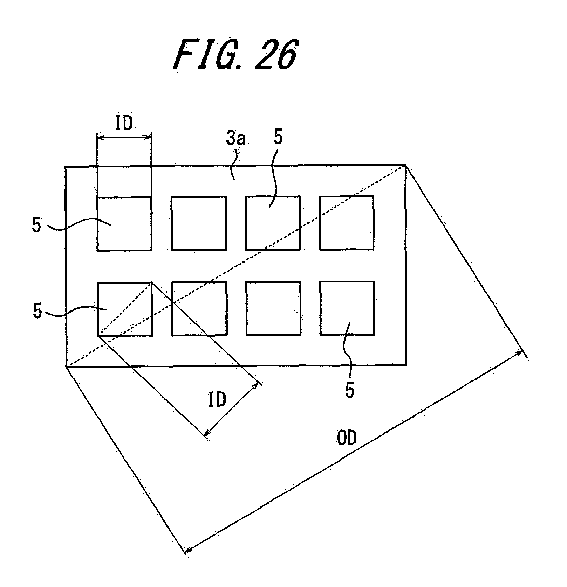

Yet further, the pin 3 may have various types of cross sectional configurations including oval, rectangular, polygonal, cross and the like in the present invention, as shown in FIGS. 8 to 23 and 26.

### Examples

Test studs as Examples 1 to 40 and Comparative Examples 1,2 each having a pin with a hole formed in an upper surface thereof were prepared in order to confirm an effect of the present invention. Examples 5, 6, 7, 10, 14 and 16 are not according to the present invention.
Further, test studs as Conventional Examples 1,2 each having a pin without a hole formed in an upper surface thereof were also prepared.
The test studs of each of these Examples, Comparative Examples and Conventional Examples were fitted in pit holes formed in a ground-contact surface of a tread portion of a tire having tire size: 195/ 65R15, whereby test tires of Examples, Comparative Examples and Conventional Examples were prepared. Each of the test tires was subjected to following tests at internal pressure of 230 kPa for evaluating performances of the tire.

### <Braking performance on ice>

Braking performance on ice of a studded tire was evaluated by: a test driver hitting the brakes suddenly on a test course having an ice road surface when a vehicle with relevant test tires mounted thereon was running at the initial speed of 20 km/hour; measuring a braking distance travelled by the vehicle in a period from the sudden brakes to a moment when the vehicle completely stopped; obtaining a reciprocal of the braking distance value thus measured; and converting each reciprocal value to an index value relative to the reciprocal value of the test tire of Conventional Example 2 being "100". The larger index value represents the better braking performance on an ice road surface.

### <Resistance to stud-coming off>

Resistance to stud-coming off of a studded tire was evaluated by: running a vehicle with relevant new test tires mounted thereon by 30,000 km on ice/snow and dry road surfaces, respectively; counting the number of the studs which had come off from the tires after the running; calculating ratio of the number of the studs which had come off with respect to the number of all studs initially fitted in the tires; and converting each ratio to an index value relative to the ratio of the test tire of Conventional Examples 1,2 being "100". The smaller index value represents the higher resistance to stud-coming off.

The evaluation results, as well as the relevant characteristics, of the test tires are shown in Table 1 below.

Each of the test tires was mounted on a vehicle such that the aforementioned "one side in the tire circumferential direction" corresponds to the leading end side and the aforementioned "the other side in the tire circumferential direction" corresponds to the trailing end side thereof

**Table 1-1**

| | Example 1 | Example 2 | Example 3 | Comp. Ex. 1 | Comp. Ex. 2 | Example 4 | Example 5 | Examples 6 | Example 7 | Example 8 | Example 9 | Example 10 | Example 11 | Example 12 |
|---|---|---|---|---|---|---|---|---|---|---|---|---|---|---|
| configuration of body | FIG.2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 |
| | Column-like | Column-like | Column-like | Column-like | Column-like | Column-like | Column-like | Column-like | Column-like | Column-like | Column-like | Column-like | Column-like | Column-like |
| Configuration of upper surface of pin | FIG. 8 | FIG. 8 | FIG. 8 | FIG. 8 | FIG. 8 | FIG. 8 | FIG. 8 | FIG. 8 | FIG .8 | FIG. 8 | FIG. 8 | FIG. 8 | FIG. 9 | FIG. 10 |
| | Oval | Oval | Oval | Oval | Oval | Oval | Oval | Oval | Oval | Oval | Oval | Oval | Oval | Oval |
| Number of hole(s) | 1 | 1 | 1 | 1 | 1 | 1 | 1 | 1 | 1 | 1 | 1 | 1 | 2 | 4 |
| Configuration of hole | Oval | Oval | Oval | Oval | Oval | Oval | Oval | Oval | Oval | Oval | Oval | Oval | Circular | Sector-shaped |
| ID(mm) | 1.36 | 1.36 | 1.36 | 1.36 | 1.36 | 1.36 | 1.36 | 1.36 | 1.36 | 1.10 | 2.30 | 0.46 | 0.68 | 0.90 |
| d(mm) | 0.30 | 0.40 | 0.22 | 0.30 | 0.30 | 0.30 | 0.30 | 0.30 | 0.30 | 0.30 | 0.30 | 0.30 | 0.30 | 0.30 |
| OD(mm) | 2.90 | 2.90 | 2.90 | 2.90 | 2.90 | 2.00 | 4.00 | 1.90 | 4.10 | 2.90 | 2.90 | 2.90 | 2.90 | 2.90 |
| h(mm) | 1.20 | 0.80 | 2.00 | 1.20 | 1.20 | 1.20 | 1.20 | 1.20 | 1.20 | 1.20 | 1.20 | 1.20 | 1.20 | 1.20 |
| ID/OD | 0.47 | 0.47 | 0.47 | 0.47 | 0.47 | 0.68 | 0.34 | 0.72 | 0.33 | 0.38 | 0.79 | 0.16 | 0.23 | 0.31 |
| d/h | 0.25 | 0.50 | 0.11 | 0.51 | 0.09 | 0.25 | 0.25 | 0.25 | 0.25 | 0.25 | 0.25 | 0.25 | 0.25 | 0.25 |
| L | 9.2 | 10.3 | 10.3 | 10.3 | 103 | 8.1 | 13.0 | 7.9 | 13.2 | 9.7 | 12.6 | 8.1 | 11.3 | 16.2 |
| L/OD | 3.16 | 3.16 | 3.16 | 3.16 | 3.16 | 3.49 | 2.95 | 3.54 | 2.94 | 3.02 | 3.67 | 2.67 | 3.89 | 5.58 |
| Rf | 4.1 | 4.1 | 4.1 | 4.1 | 4.1 | 4.1 | 4.1 | 4.1 | 4.1 | 4.1 | 4.1 | 4.1 | 4.1 | 4.1 |
| Rk | 4.1 | 4.1 | 4.1 | 4.1 | 4.1 | 4.1 | 4.1 | 4.1 | 4.1 | 4.1 | 4.1 | 4.1 | 4.1 | 4.1 |
| Ri | 4.1 | 4.1 | 4.1 | 4.1 | 4.1 | 4.1 | 4.1 | 4.1 | 4.1 | 4.1 | 4.1 | 4.1 | 4.1 | 4.1 |
| Ro | 4.1 | 4.1 | 4.1 | 4.1 | 4.1 | 4.1 | 4.1 | 4.1 | 4.1 | 4.1 | 4.1 | 4.1 | 4.1 | 4.1 |
| Braking performance on ice (INDEX) | 103 | 101 | 104 | 99 | 98 | 102 | 105 | 101 | 106 | 103 | 104 | 102 | 104 | 105 |
| Resistance to stud-coming off (INDEX) | 100 | 100 | 100 | 100 | 100 | 98 | 100 | 98 | 100 | 100 | 100 | 100 | 100 | 100 |

**Table 1-2**

| | Example 13 | Example 14 | Example 15 | Example 16 | Example 17 | Example 18 | Example 19 | Example 20 | Example 21 | Example 22 | Example 23 | Example 24 | Example 25 | Example 26 | Examp 27 |
|---|---|---|---|---|---|---|---|---|---|---|---|---|---|---|---|
| Configuration of body | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 |
| | Column-like | Column-like | Column-like | Column-like | Column-like | Column-like | Column-like | Column-like | Column-like | Column-like | Column-like | Column-like | Column-like | Column-like | Column-like |
| Configuration of upper surface of pin | FIG. 11 | FIG. 26 | FIG. 8 | FIG. 8 | FIG. 12 | FIG. 13 | FIG. 13 | FIG. 13 | FIG. 13 | FIG. 13 | FIG. 13 | FIG. 13 | FIG. 13 | FIG. 13 | FIG. 13 |
| | Rectang ular | Rectang ular | Oval | Oval | Circlar | Cross | Cross | Cross | Cross | Cross | Cross | Cross | Cross | Cross | Cross |
| Number of hole(s) | 4 | 8 | 1 | 1 | 1 | 1 | 1 | 1 | 1 | 1 | 1 | 1 | 1 | 1 | 1 |
| Configuration of hole | Rectang ular | Square | Oval | Oval | Circular | Circular | Circular | Circular | Circular | Circular | Circular | Circular | Circular | Circular | Circular |
| ID(mm) | 1.00 | 0.75 | 2.32 | 0.40 | 1.36 | 1.00 | 1.00 | 1.00 | 1.00 | 1.00 | 1.00 | 1.00 | 1.00 | 1.00 | 1.00 |
| d(mm) | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| OD(mm) | 2.90 | 2.90 | 2.90 | 2.90 | 2.90 | 2.90 | 2.90 | 2.90 | 2.90 | 2.90 | 2.90 | 2.90 | 2.90 | 2.90 | 2.90 |
| h(mm) | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 |
| ID/OD | 0.34 | 0.26 | 0.80 | 0.14 | 0.47 | 0.34 | 0.34 | 0.34 | 0.34 | 0.34 | 0.34 | 0.34 | 0.34 | 0.34 | 0.34 |
| d/h | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |
| L | 19.1 | 26.4 | 12.6 | 8.0 | 13.4 | 15.4 | 15.4 | 15.4 | 15.4 | 15.4 | 15.4 | 15.4 | 15.4 | 15.4 | 15.4 |
| L/OD | 6.59 | 9.10 | 4.36 | 2.75 | 4.61 | 5.33 | 5.33 | 5.33 | 5.33 | 5.33 | 5.33 | 5.33 | 5.33 | 5.33 | 5.33 |
| Rf | 4.1 | 4.1 | 4.1 | 4.1 | 4.1 | 4.1 | 3.3 | 4.1 | 2.9 | 3.1 | 5.0 | 5.1 | 4.1 | 4.1 | 4.1 |
| Rk | 4.1 | 4.1 | 4.1 | 4.1 | 4.1 | 4.1 | 4.9 | 4.9 | 4.9 | 5.1 | 4.0 | 4.1 | 2.9 | 5.1 | 4.1 |
| Ri | 4.1 | 4.1 | 4.1 | 4.1 | 4.1 | 4.1 | 4.1 | 4.1 | 4.1 | 4.1 | 4.1 | 4.1 | 4.1 | 4.1 | 2.9 |
| Ro | 4.1 | 4.1 | 4.1 | 4.1 | 4.1 | 4.1 | 4.1 | 4.1 | 4.1 | 4.1 | 4.1 | 4.1 | 4.1 | 4.1 | 4.1 |
| Braking performance on ice (INDEX) | 104 | 102 | 105 | 101 | 104 | 105 | 106 | 107 | 105 | 105 | 105 | 104 | 103 | 107 | 105 |
| Resistance to stud-coming off (INDEX) | 100 | 100 | 100 | 100 | 100 | 100 | 99 | 98 | 99 | 97 | 100 | 102 | 103 | 101 | 102 |

**Table 1-3**

| | Example 28 | Example 29 | Example 30 | Example 31 | Example 32 | Example 33 | Example 34 | Example 35 | Example 36 | Example 37 | Example 38 | Example 39 | Example 40 | Conventional Ex. 1 | Conventi onal Ex. 2 |
|---|---|---|---|---|---|---|---|---|---|---|---|---|---|---|---|
| Configuration of body | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | FIG. 2 | - | - |
| | Column- like | Column- like | Column-like | Column- like | Column- like | Column- like | Column- like | Column- like | Column- like | Column- like | Column- like | Column- like | Column-like | Column-like | Column -like |
| Configuration of upper surface of pin | FIG. 13 | FIG. 13 | FIG. 13 | FIG. 14 | FIG. 15 | FIG. 16 | FIG. 17 | FIG. 18 | FIG. 19 | FIG. 20 | FIG. 21 | FIG. 22 | FIG. 23 | FIG. 24 | FIG. 25 |
| | Cross | Cross | Cross | Rectang ular | Equilateral triangular | Isosceles triangular | Square | Rhomb oid | Hexag onal | Concave octagonal | Concave decagonal | Cross | Modified cross | Circular | Oval |
| Number of hole(s) | 1 | 1 | 1 | 1 | 1 | 1 | 1 | 1 | 1 | 1 | 1 | 1 | 1 | - | - |
| Configuration of hole | Circular | Circular | Circular | Rectang ular | Circular | Circular | Circular | Circular | Circular | Circular | Circular | Circular | Rectang ular | - | - |
| ID(mm) | 1.00 | 1.00 | 1.00 | 2.00 | 1.00 | 0.68 | 1.00 | 0.68 | 1.00 | 1.00 | 1.00 | 1.00 | 1.00 | - | - |
| d(mm) | 0.30 | 0.30 | 0.30 | 0.30 | 0.30 | 0.30 | 0.30 | 0.30 | 0.30 | 0.30 | 0.30 | 0.30 | 0.30 | - | - |
| OD(mm) | 2.90 | 2.90 | 2.90 | 2.90 | 2.90 | 2.90 | 2.90 | 2.90 | 2.90 | 2.90 | 2.90 | 2.90 | 2.90 | 2.90 | 2.90 |
| h(mm) | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 |
| ID/OD | 0.34 | 0.34 | 0.34 | 0.69 | 0.34 | 0.23 | 0.34 | 0.23 | 0.34 | 0.34 | 0.34 | 0.34 | 0.34 | - | - |
| d/h | 0.25 | 0.25 | 0.25 | 0.25 | 0.25 | 0.25 | 0.25 | 0.25 | 0.25 | 0.25 | 0.25 | 0.25 | 0.25 | - | - |
| L | 15.4 | 15.4 | 15.4 | 14.7 | 11.8 | 9.1 | 14.7 | 8.8 | 9.5 | 15.2 | 11.3 | 15.4 | 14.1 | 9.1 | 7.0 |
| L/OD | 5.33 | 5.33 | 5.33 | 5.07 | 4.08 | 3.15 | 5.08 | 3.05 | 3.29 | 5.22 | 3.91 | 5.33 | 4.87 | 3.14 | 2.42 |
| Rf | 4.1 | 4.1 | 4.1 | 4.1 | 4.1 | 4.1 | 4.1 | 4.1 | 4.1 | 4.1 | 4.1 | 4.1 | 4.1 | 4.1 | 4.1 |
| Rk | 4.1 | 4.1 | 4.1 | 4.1 | 4.1 | 4.1 | 4.1 | 4.1 | 4.1 | 4.1 | 4.1 | 4.1 | 4.1 | 4.1 | 4.1 |
| Ri | 5.1 | 4.1 | 4.1 | 4.1 | 4.1 | 4.1 | 4.1 | 4.1 | 4.1 | 4.1 | 4.1 | 4.1 | 4.1 | 4.1 | 4.1 |
| Ro | 41 | 2.9 | 5.1 | 4.1 | 4.1 | 4.1 | 4.1 | 4.1 | 4.1 | 4.1 | 4.1 | 4.1 | 4.1 | 4.1 | 4.1 |
| Braking performance on ice (INDEX) | 105 | 105 | 105 | 103 | 103 | 102 | 104 | 102 | 102 | 104 | 104 | 105 | 103 | 101 | 100 |
| Resistance to stud-coming off (INDEX) | 101 | 102 | 101 | 100 | 100 | 99 | 100 | 99 | 100 | 100 | 100 | 100 | 100 | 100 | 100 |

It is understood from Tables 1-1 to 1-3 that the test tires of Examples 1-40 unanimously exhibit better braking performance on ice than the test tires of Conventional Examples and Comparative Examples.

### REFERENCE SIGNS LIST

- 1: Stud
- 2: Body (Shank)
- 2a: End face
- 3: Pin
- 4: Flange
- 5: Hole
- 6: Ground-contact surface of tread portion
- 7: Pit hole
- 10: Tread portion
- 11: Stud
- 12: Pin
- 13: Road surface
- 14: Pit hole
- 15: Body (Shank)

## Claims

1. A tire stud (1), comprising: a column-like body (2) having a recessed portion formed at one end face (2a) in the axial direction thereof; and a pin (3) provided in the recessed portion such that a portion of the pin (3) protrudes from the one end face (2a) of the body (3), wherein:
at least one hole (5) extending in the axial direction of the pin (3) is formed in an upper surface (3a) of the pin (3); and
provided that the maximum height measured from the one end face (2a) of the body (2) to the upper surface (3a) of the pin (3) is h (mm) and the maximum depth of the hole (5) formed in the upper surface (3a) of the pin (3) is d (mm), 0.1 ≤ d/h ≤ 0.5, **characterized in that**:
provided that the maximum diameter of the upper surface (3a) of the pin (3) is OD (mm) and the total edge length at the upper surface (3a) of the pin (3) is L (mm), 2.0 ≤ OD ≤ 4.0 and 3.0 ≤ L/OD ≤ 9.0.

2. The tire stud (1) of claim 1, wherein provided that the maximum diameter of the upper surface (3a) of the pin (3) is OD (mm) and the maximum diameter of the hole (5) formed in the upper surface (3a) of the pin (3) is ID (mm), 0.15 ≤ ID/OD ≤ 0.8.

3. The tire stud (1) of claim 1 or 2, wherein the one end face (2a) of the body (2) has a circular shape.

4. The tire stud (1) of any of claims 1 to 3, wherein the body (2) has a flange (4) and provided that: radius measured from the central axis of the body (2) to an outer peripheral edge of the flange (4) is R (mm); the maximum value of radius R on one side in the tire circumferential direction is Rf (mm); and the maximum value of radius R on the other side in the tire circumferential direction is Rk (mm), Rf ≤ Rk.

5. The tire stud (1) of any of claims 1 to 4, wherein the body (2) has a flange (4) and provided that: radius measured from the central axis of the body to an outer peripheral edge of the flange (4) is R (mm); the maximum value of radius R on one side in the tire circumferential direction is Rf (mm); the maximum value of radius R on the other side in the tire circumferential direction is Rk (mm); the maximum value of radius R on the inner side in the tire widthwise direction is Ri (mm); and the maximum value of radius R on the outer side in the tire widthwise direction is Ro (mm), Rf, Rk, Ri and Ro are each in the range of 3.0 mm to 5.0 mm (inclusive of 3.0 mm and 5.0 mm).

6. A studded tire, comprising the tire studs (1) of any of claims 1 to 5 fitted in pit holes (7) formed in a ground-contact surface (6) of a tread thereof

## Patentansprüche

1. Reifennagel (1) (Spike), umfassend: einen säulenförmigen Körper (2) mit einem an einer Endfläche (2a) in axialer Richtung zu diesem gebildeten vertieften Abschnitt, und einen Stift (3), im vertieften Abschnitt dergestalt vorgesehen, dass ein Abschnitt des Stiftes (3) aus der einen Endfläche (2a) des Körpers (3) herausragt, wobei:
zumindest ein sich in axialer Richtung zu dem Stift (3) erstreckendes Loch (5) in einer oberen Oberfläche (3a) des Stiftes (3) gebildet ist, und
sofern die von der einen Endfläche (2a) des Körpers (2) zu der oberen Oberfläche (3a) des Stiftes (3) gemessene maximale Höhe h (mm) beträgt und die maximale Tiefe des in der oberen Oberfläche (3a) des Stiftes (3) gebildeten Lochs (5) d (mm) beträgt, 0,1 ≤ d/h ≤ 0,5 ist, **dadurch gekennzeichnet, dass**:
sofern der Maximaldurchmesser der oberen Oberfläche (3a) des Stiftes (3) OD (mm) beträgt und die Gesamtlänge der Kante an der oberen Oberfläche (3a) des Stiftes (3) L (mm) beträgt, 2,0 ≤ OD ≤ 4,0 und 3,0 ≤ L/OD ≤ 9,0 ist.

2. Reifennagel (1) nach Anspruch 1, wobei, sofern der Maximaldurchmesser der oberen Oberfläche (3a) des Stiftes (3) OD (mm) beträgt und der Maximaldurchmesser des an der oberen Oberfläche (3a) des Stiftes (3) gebildeten Lochs (5) ID (mm) beträgt, 0,15 ≤ ID/OD ≤ 0,8 ist.

3. Reifennagel (1) nach Anspruch 1 oder 2, wobei die eine Endfläche (2a) des Körpers (2) eine Kreisform aufweist.

4. Reifennagel (1) nach einem der Ansprüche 1 bis 3, wobei der Körper (2) einen Flansch (4) aufweist, und sofern: der von der zentralen Achse des Körpers (2) bis zu einer äußeren peripheren Kante des Flansches (4) gemessene Radius R (mm) beträgt, der Höchstwert von Radius R auf einer Seite in der Umfangsrichtung des Reifens Rf (mm) beträgt und der Höchstwert von Radius R auf der anderen Seite in der Umfangsrichtung des Reifens Rk (mm) beträgt, Rf ≤ Rk ist.

5. Reifennagel (1) nach einem der Ansprüche 1 bis 4, wobei der Körper (2) einen Flansch (4) aufweist, und sofern: der von der zentralen Achse des Körpers bis zu einer äußeren peripheren Kante des Flansches (4) gemessene Radius R (mm) beträgt, der Höchstwert von Radius R auf einer Seite in der Umfangsrichtung des Reifens Rf (mm) beträgt, der Höchstwert von Radius R auf der anderen Seite in der Umfangsrichtung des Reifens Rk (mm) beträgt, der Höchstwert von Radius R an der Innenseite in der Breitenrichtung des Reifens Ri (mm) beträgt und der Höchstwert von Radius R an der Außenseite in der Breitenrichtung des Reifens Ro (mm) beträgt, Rf, Rk, Ri und Ro jeder für sich im Bereich von 3,0 mm bis 5,0 mm (einschließlich 3,0 mm bis einschließlich 5,0 mm) sind.

6. Mit Nägeln ausgestatteter Reifen, umfassend die Reifennägel (1) nach einem der Ansprüche 1 bis 5, eingepasst in Stiftlöcher (7), welche in einer Bodenberührungsoberfläche (6) einer Lauffläche desselben gebildet sind.

## Revendications

1. Crampon pour pneumatique (1), qui comprend : un corps en forme de colonne (2) qui possède une partie en retrait formée au niveau d'une face d'extrémité (2a) dans la direction axiale de celui-ci ; et une broche (3) prévue dans la partie en retrait de sorte qu'une partie de la broche (3) sorte de ladite une face d'extrémité (2a) du corps (3), dans lequel :
au moins un orifice (5) qui s'étend dans la direction axiale de la broche (3) est formé dans une surface supérieure (3a) de la broche (3) ; et
à condition que la hauteur maximale mesurée entre ladite une face d'extrémité (2a) du corps (2) et la surface supérieure (3a) de la broche (3) soit h (mm), et que la profondeur maximale de l'orifice (5) formé dans la surface supérieure (3a) de la broche (3) soit d (mm), 0,1 ≤ d/h ≤ 0,5, **caractérisé en ce que** :
à condition que le diamètre maximal de la surface supérieure (3a) de la broche (3) soit OD (mm) et que la longueur de bord totale au niveau de la surface supérieure (3a) de la broche (3) soit L (mm), 2,0 ≤ OD ≤ 4,0 et 3,0 ≤ L/OD ≤ 9,0.

2. Crampon pour pneumatique (1) selon la revendication 1, dans lequel, à condition que le diamètre maximal de la surface supérieure (3a) de la broche (3) soit OD (mm) et que le diamètre maximal de l'orifice (5) formé dans la surface supérieure (3a) de la broche (3) soit ID (mm), 0,15 ≤ ID/OD ≤ 0,8.

3. Crampon pour pneumatique (1) selon la revendication 1 ou 2, dans lequel ladite une face d'extrémité (2a) du corps (2) possède une forme circulaire.

4. Crampon pour pneumatique (1) selon l'une quelconque des revendications 1 à 3, dans lequel le corps (2) possède une collerette (4) et à condition que : le rayon mesuré entre l'axe central du corps (2) et un bord périphérique extérieur de la collerette (4) soit R (mm) ; la valeur maximale du rayon R sur un côté dans la direction circonférentielle du pneumatique soit Rf (mm) ; et la valeur maximale du rayon R de l'autre côté dans la direction circonférentielle du pneumatique soit Rk (mm), Rf ≤ Rk.

5. Crampon pour pneumatique (1) selon l'une quelconque des revendications 1 à 4, dans lequel le corps (2) possède une collerette (4) et à condition que : le rayon mesuré entre l'axe central du corps et un bord périphérique extérieur de la collerette (4) soit R (mm) ; la valeur maximale du rayon R sur un côté dans la direction circonférentielle du pneumatique est Rf (mm) ; la valeur maximale du rayon R de l'autre côté dans la direction circonférentielle du pneumatique soit Rk (mm) ; la valeur maximale du rayon R sur le côté intérieur dans la direction de la largeur du pneumatique soit Ri (mm) ; et la valeur maximale du rayon R sur le côté extérieur dans la direction de la largeur du pneumatique est Ro (mm), Rf, Rk, Ri et Ro sont chacun de l'ordre de 3,0 mm à 5,0 mm (3,0 mm et 5,0 mm inclus).

6. Pneumatique à crampon, qui comprend les crampons pour pneumatique (1) selon l'une quelconque des revendications 1 à 5 placés dans des orifices profonds (7) formés dans une surface en contact avec le sol (6) d'une bande de roulement de celui-ci.
